# EUROPEAN PATENT APPLICATION

(11) **EP 4 299 268 A1**
(43) Date of publication of application: **03.01.2024**
(21) Application number: 22774794.6
(22) Date of filing: 17.02.2022
(51) Int. Cl.: B29B 17/00

(54) **METAL FILM/RESIN SEPARATION METHOD, AND SEPARATION DEVICE THEREFOR**

(30) Priority: 26.03.2021 JP 2021054258; 05.08.2021 JP 2021129276
(71) Applicant: Uchida Co., Ltd., Nagano, 395-0301 (JP)
(72) Inventor: UCHIDA Masakazu, Shimoina-gun, Nagano 395-0301 (JP)
(74) Representative: Kramer Barske Schmidtchen Patentanwälte PartG mbB
(86) International application number: PCT/JP2022/006310
(87) International publication number: WO 2022/201994

(57) **Abstract**

This metal film and resin separation method is a method of putting synthetic resin waste in which a metal film adheres to a synthetic resin into a separation chamber (2) in a casing (1), rotating a hammer rotor (16) in the separation chamber (2), and separating and recovering the metal film and synthetic resin. While rotating the hammer rotor (16), the synthetic resin waste in the separation chamber (2) is crushed, and a temperature in the separation chamber (2) is increased to an exfoliation temperature which is higher than a normal temperature and less than a temperature at which the synthetic resin starts melting. While holding the temperature in the separation chamber (2) at the exfoliation temperature, the synthetic resin waste is crushed and the metal film is exfoliated from the synthetic resin.

## Description

### Technical Field

The present invention relates to a metal film and resin separation method of crushing synthetic resin waste provided with a metal film such as a PTP containing aluminum foil, packaging containers, CDs, and DVDs and separating and recovering the metal film and synthetic resin, and a separation apparatus thereof. It is noted that in this specification, the metal film is a metallic film including metal foils of various metals such as an aluminum foil and a nickel foil, an evaporation film of various metals, and a metal coating layer by metal thermal spraying.

### Background Art

In recent years, a PTP to be used at the time of packaging capsules and tablets and a packaging container containing an aluminum foil that packages food items, etc. are mass-produced, and after use, almost all the PTPs and the packaging containers are discarded.

Regarding such a packaging container such as the PTP containing the aluminum foil, it is difficult to separate the aluminum foil from a synthetic resin under current conditions. Thus, the packaging container has poor recyclability, and in most cases, the packaging container is used for landfill or incinerated as a general burnable waste.

However, incineration of a packaging waste such as the PTP containing the aluminum foil goes against social trends toward carbon neutrality, realization of a decarbonized society, and restrictions on carbon emissions. Further, since a synthetic resin such as PVC is incinerated, there is a concern about generation of toxic gases, aluminum foil tends to remain unburned, and establishment of a recycling technology for separating and recovering the aluminum foil and the synthetic resin is desired.

Thus, the present inventor proposed an aluminum foil and synthetic resin separation method of crushing waste such as a PTP containing an aluminum foil, packaging containers, CDs, and DVDs and separating and recovering the aluminum foil and a synthetic resin by Patent Literature 1 to be described below.

### Citation List

### Patent Literature

Patent Literature 1: Japanese Patent No. 5506501

### Summary of Invention

### Technical Problem

In the aluminum foil and synthetic resin separation method, a rotor with a blade is rotated while blowing hot air into a separation chamber and increasing a temperature in the chamber to an appropriate temperature, an aluminum foil is separated from a synthetic resin while crushing synthetic resin waste provided with the aluminum foil, the crushed and separated aluminum foil is fed to an aluminum recovery chamber through a perforated plate on the lower side of the separation chamber, and the crushed and separated synthetic resin is fed to a resin recovery chamber adjacent to the separation chamber by rotation of the rotor, so that the aluminum foil and the synthetic resin are separated and recovered.

With this aluminum foil and synthetic resin separation method, when a separation task is performed while maintaining the temperature in the separation chamber at an appropriate separation temperature, it is possible to separate the aluminum foil from the synthetic resin while crushing the synthetic resin waste provided with the aluminum foil.

However, by the rotation of the rotor with the blade, friction resistance heat due to friction between the rotor with the blade and the synthetic resin waste and between the synthetic resin waste is generated. By this friction heat, the temperature in the separation chamber is easily increased to the appropriate temperature or higher. Particularly in a case where an input amount of the synthetic resin waste is large, the temperature in the separation chamber is excessively increased. As a result, the synthetic resin starts melting in the separation chamber, a mass of the synthetic resin waste is generated, and an inseparable part is easily generated. Therefore, separability of the aluminum foil and the synthetic resin is lowered, and separation and recovery efficiency are lowered.

The present invention solves the problem described above, and an object of the present invention is to provide a metal film and resin separation method capable of efficiently separating and recovering a metal film and a synthetic resin from synthetic resin waste provided with a metal film such as a metal foil and a metal evaporation film with higher separation performance, and a separation apparatus thereof.

### Solution to Problem

A metal film and resin separation method according to the present invention is a metal film and resin separation method of putting synthetic resin waste in which a metal film adheres to a synthetic resin into a separation chamber in a casing, rotating a hammer rotor in the separation chamber, and separating and recovering the metal film and synthetic resin, the metal film and resin separation method including
a step of, while rotating the hammer rotor, increasing a temperature in the separation chamber to an exfoliation temperature ranging from a normal temperature to a temperature less than a melting temperature of the synthetic resin, and crushing the synthetic resin waste in the separation chamber, and a step of, by sprinkling water from a water sprinkler into the separation chamber, holding the temperature in the separation chamber at the exfoliation temperature, and exfoliating the metal film from the synthetic resin.

It is noted that the exfoliation temperature is a temperature less than the melting temperature of the synthetic resin, the temperature at which the synthetic resin and the metal film are exfoliated mainly due to a difference in expansion coefficient (thermal expansion coefficient, linear expansion coefficient) in the synthetic resin waste provided with the metal film, the temperature to be set in accordance with a type of the synthetic resin, a type of the metal film, a formation method of the metal film, etc.

Accordig to this invention, the synthetic resin waste provided with the metal film such as a PTP put into the separation chamber is agitated and crushed by rotation of the hammer rotor. At this time, by an external heating means or friction heat between the hammer rotor and the synthetic resin waste, or by friction heat between the synthetic resin waste, temperatures of the metal film and the synthetic resin of the synthetic resin waste are increased from a normal temperature to the exfoliation temperature less than the melting temperature of the synthetic resin.

At the time of this temperature increase, the synthetic resin having an approximately twice to approximately six times higher thermal expansion coefficient than the thermal expansion coefficient (linear expansion coefficient) of the metal film is largely extended with respect to the metal film due to the difference between the thermal expansion coefficient of the synthetic resin and the thermal expansion coefficient of the metal film. Thereby, the metal film is exfoliated and separated from the synthetic resin of the waste which is being crushed.

In addition, for example, in a case where the metal film and the synthetic resin are heat-sealed at the time of manufacture, and additionally because a heat seal temperature of the metal film and the synthetic resin is close to the exfoliation temperature, a sealing surface becomes easily exfoliated, and following crushing, the metal film is efficiently exfoliated and separated from the synthetic resin.

In addition, by water sprinkling into the separation chamber, humidity is increased. Humidity expansion of the synthetic resin is larger than the metal film. By this, the synthetic resin and the metal film also become easily exfoliated and are efficiently exfoliated.

Further, the exfoliation temperature is the temperature less than the melting temperature of the synthetic resin. Thus, a mass of the synthetic resin is not generated in the separation chamber, and the metal film is favorably exfoliated from the synthetic resin with high separability. Further, in the separation chamber, generation of static electricity which is easily generated in the synthetic resin waste is suppressed by water sprinkling, adherence of the metal film and the synthetic resin due to static electricity is eliminated, and it is possible to facilitate separation of the metal film and the synthetic resin.

In the metal film and resin separation method, it is preferable that the metal film exfoliated from the synthetic resin is first taken out from the separation chamber by suctioning through a perforated plate (screen), and then a synthetic resin crushed and remaining in the separation chamber is taken out from the separation chamber.

Thereby, pieces of the crushed and exfoliated metal film are taken out from the separation chamber through the perforated plate, relatively large pieces of the synthetic resin remain in the separation chamber, and it is possible to efficiently separate and take out the metal film and the synthetic resin.

In addition, it is possible to put the metal film taken out from the separation chamber through the perforated plate into a first sieve device, sift the metal film, separate a residual synthetic resin in the metal film, take out a synthetic resin after exfoliation from which the metal film is exfoliated from the separation chamber, put the synthetic resin after exfoliation into a second sieve device, sift the synthetic resin after exfoliation, and separate a residual metal film from the synthetic resin after exfoliation.

Thereby, pieces of the residual synthetic resin are further sifted and separated from the pieces of the metal film. The synthetic resin after exfoliation is also sifted, and pieces of the metal film are further separated from the synthetic resin. Therefore, it is possible to efficiently separate and recover the metal film and the synthetic resin with higher separation performance (separation rate).

In addition, it is possible to configure that after the metal film is put into a sieve box of the first sieve device and the metal film is sifted, the residual synthetic resin is put again into another sieve box and sifted. According to this, it is possible to further separate the metal film mounted on the residual synthetic resin, incapable of being separated, etc. in the first sifting step from the synthetic resin by the second sifting.

In addition, it is possible to configure that after the synthetic resin after exfoliation is put into a sieve box of the second sieve device and the synthetic resin after exfoliation is sifted, the residual synthetic resin is put again into another sieve box and sifted. According to this, it is possible to further separate the metal film mounted on the residual synthetic resin, incapable of being separated, etc. in the first sifting step from the synthetic resin by the second sifting.

Meanwhile, a metal film and resin separation apparatus according to the present invention is a metal film and resin separation apparatus that puts synthetic resin waste in which a metal film adheres to a synthetic resin into a separation chamber in a casing, crushes the synthetic resin waste in the separation chamber, and separates and recovers the metal film and synthetic resin, the metal film and resin separation apparatus including
a heater attached to the casing, the heater that heats the separation chamber in temperature,
a water sprinkler that sprinkles water into the separation chamber,
a hammer rotor in which a disc is fixed to a rotation shaft axially supported to be driven to rotate in the separation chamber in a transverse direction to the axis, and a plurality of hammers are pivotably supported on the disc,
a discharge port provided in a side wall portion of the casing, the discharge port through which a crushed synthetic resin waste is discharged from the separation chamber,
a resin recovery chamber provided on the outside of the discharge port,
a metal recovery box provided in the resin recovery chamber to be capable of being elevated and lowered, the metal recovery box in which a metal film exfoliated from the synthetic resin is recovered from an interior of the separation chamber through a perforated plate,
an elevating and lowering device that elevates the metal recovery box from the resin recovery chamber to an exterior of the chamber,
a discharge conveyor provided in a bottom portion of the resin recovery chamber, the discharge conveyor that discharges a synthetic resin after exfoliation from which the metal film is already exfoliated, and
a temperature controller that, by controlling the heater and also controlling a water sprinkling amount of the water sprinkler, controls the temperature in the separation chamber to an exfoliation temperature which is higher than a normal temperature and less than a melting temperature of the synthetic resin, the exfoliation temperature at which the synthetic resin and the metal film are exfoliated.

According to the metal film and resin separation apparatus of this invention, by an operation of separating the metal film and the resin as described above, it is possible to efficiently separate and recover the metal film and the synthetic resin from the synthetic resin waste provided with the metal film such as a metal foil and a metal evaporation film with higher separation performance.

In the metal film and resin separation apparatus, it is possible to configure that
a first sieve device that sifts the metal film after exfoliation taken out into the metal recovery box, and separates a residual synthetic resin in the metal film is provided, and a second sieve device that sifts the synthetic resin after exfoliation discharged by the discharge conveyor, and separates a residual metal film from the synthetic resin after exfoliation is provided.

In addition, in the metal film and resin separation apparatus, it is possible to configure that two-tiered upper and lower sieve boxes are arranged in the first sieve device, and after the metal film is once put into the upper sieve box and the metal film is sifted, a residual synthetic resin is put into the lower sieve box and sifted again. According to this, it is possible to further separate the metal film mounted on the residual synthetic resin, incapable of being separated, etc. by the first sifting from the synthetic resin by the second sifting.

In addition, in the metal film and resin separation apparatus, it is possible to configure that two-tiered upper and lower sieve boxes are arranged in the second sieve device, and after the synthetic resin after exfoliation is once put into the upper sieve box and the synthetic resin after exfoliation is sifted, a residual synthetic resin is put into the lower sieve box and sifted again. According to this, it is possible to further separate the metal film mounted on the residual synthetic resin, incapable of being separated, etc. by the first sifting from the synthetic resin by the second sifting.

### Effect of Invention

According to the metal film and resin separation method of the present invention and the separation apparatus thereof, it is possible to efficiently separate and recover the metal film and the synthetic resin from the synthetic resin waste adhered with the metal film with higher separation performance.

### Brief Description of Drawings

[FIG. 1] FIG. 1 is a front view with a partial section of a metal film and resin separation apparatus showing an embodiment of the present invention.
[FIG. 2] FIG. 2 is a right side view of the same metal film and resin separation apparatus.
[FIG. 3] FIG. 3 is a sectional view along the axial direction of a hammer rotor.
[FIG. 4] FIG. 4(a) is a left side view of a metal recovery box, and FIG. 4(b) is a front view with a partial section of the metal recovery box.
[FIG. 5] FIG. 5 is a sectional view along an axial transverse direction of the hammer rotor.
[FIG. 6] FIG. 6 is a front view with a partial section when the metal recovery box is elevated.
[FIG. 7] FIG. 7(a) is a plan view of a sieve box, FIG. 7(b) is a front view of the sieve box, and FIG. 7(c) is a right side view of the same sieve box.
[FIG. 8] FIG. 8(a) is a partially enlarged plan view of an embossed plate of the sieve box, and FIG. 8(b) is a sectional view of center of the embossed plate.
[FIG. 9] FIG. 9(a) is a front view showing an inclined state of the sieve box at the time of installment, and FIG. 9(b) is a right side view of the same sieve box.
[FIG. 10] FIG. 10 is a front view of a first sieve device and a second sieve device of another embodiment.
[FIG. 11] FIG. 11 is a front view with a partial section of a metal film and resin separation apparatus of still another embodiment.
[FIG. 12] FIG. 12 is a front view with a partial section of a metal film and resin separation apparatus of further another embodiment.

### Description of Embodiments

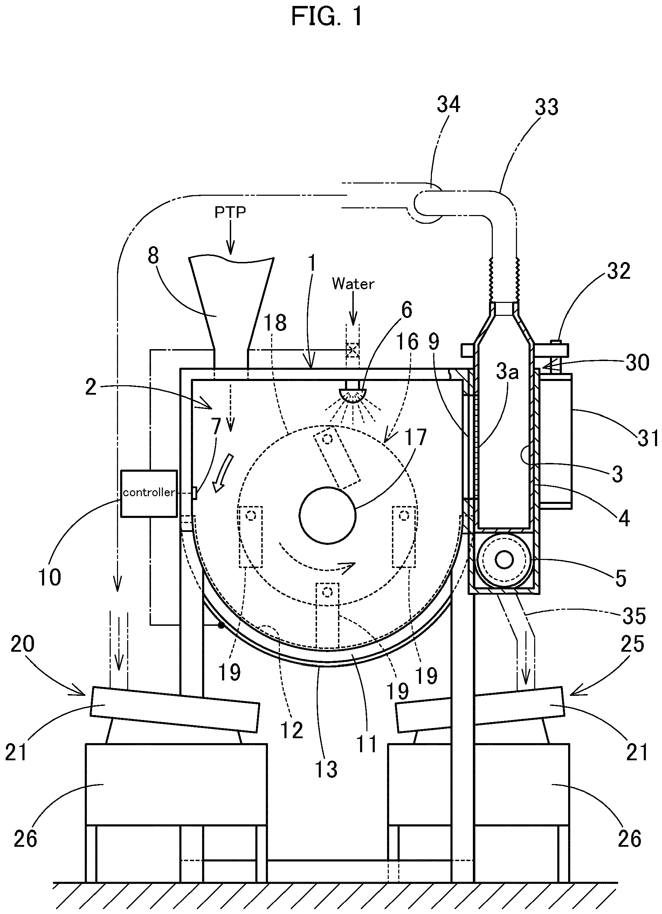

Hereinafter, an embodiment of the present invention will be described based on the drawings. FIGS. 1 to 10 show a separation apparatus that implements a metal film and resin separation method of the present invention. Schematically, this separation apparatus is configured such that synthetic resin waste in which a metal film adheres to a surface of a synthetic resin such as a PTP, a metal evaporation film, and a metal evaporation sheet is put into a separation chamber 2 in a casing 1, a hammer rotor 16 is rotated in the separation chamber 2, the metal film and the synthetic resin are separated and recovered, and further, by a first sieve device 20 and a second sieve device 25, the separated metal film and synthetic resin are respectively sifted so that residual foreign substances are separated.

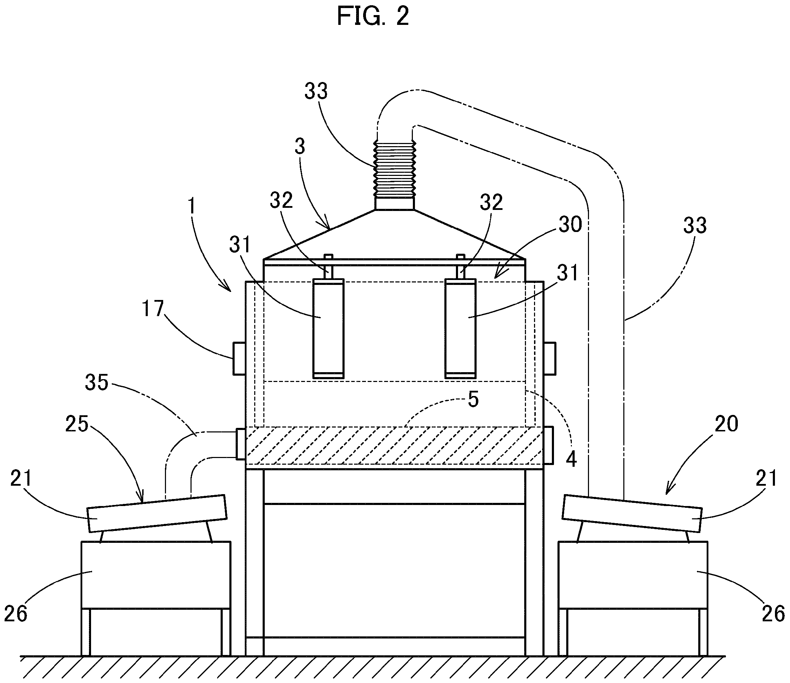

As shown in FIGS. 1 and 2, the casing 1 of the separation apparatus is formed into a box shape having a rectangular plane and a semi-cylindrical portion in a bottom portion, in which an upper surface is closed by a metal plate, and a bottom plate 11 of the bottom portion is formed to have a semi-cylindrical peripheral surface. On the upper surface of the casing 1, a hopper-shaped waste input port 8 is provided in order to put in the synthetic resin waste. In the separation chamber 2 in the casing 1, the hammer rotor 16 is pivotably supported while a rotation shaft 17 of the hammer rotor 16 is arranged in a horizontal direction, and driven and rotated at predetermined speed by a motor.

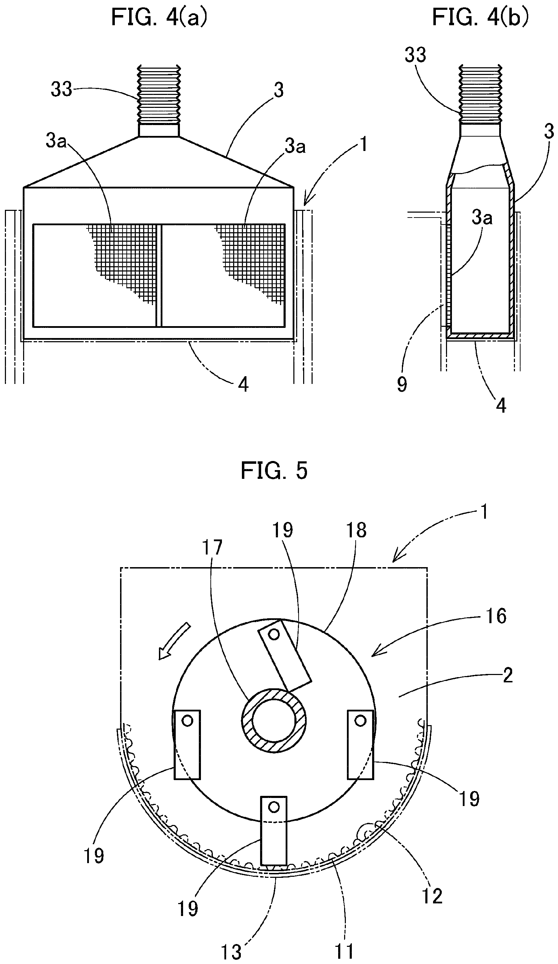

In addition, as shown in FIG. 5, on the bottom plate 11 in the casing 1, a waveform bottom plate 12 is provided. The wave direction of the waveform bottom plate 12 is the rotating direction of hammers 19 of the hammer rotor 16. The hammers 19 are formed to pass through immediately above the waveform bottom plate 12 in the circumferential direction, and efficiently crush the synthetic resin waste.

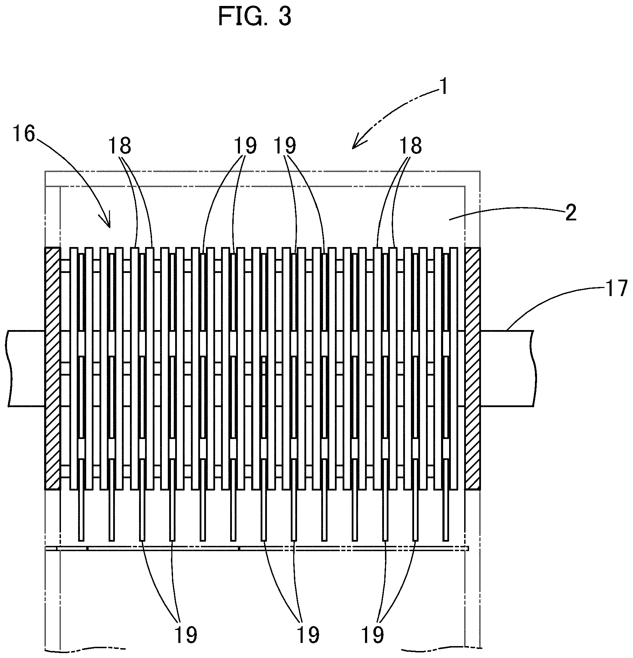

As shown in FIG. 3, in the hammer rotor 16, a large number of discs 18 are attached to the rotation shaft 17 at predetermined intervals, four hammers 19 are rotatably and pivotably supported on each of the discs 18 at intervals of 90 degrees on the circumference, and the rotation shaft 17 is driven and rotated by the motor (not shown). As the hammers 19, a blade hammer provided with a blade at an edge, a plate-shaped hammer of a plate shape with no blade, or a rod-shaped hammer of a rod shape is used in accordance with a type of the synthetic resin waste. For example, in a case of a relatively large sheet-shaped waste in which an aluminum foil or a nickel foil is attached on a sheet, the waste is finely crushed by using the blade hammer.

By rotation of the hammers 19, the synthetic resin waste is crushed while being agitated. In the hammer rotor 16, by drive and rotation of the rotation shaft 7, a large number of the hammers 19 are driven and rotated, and by addition of an operation of the waveform bottom plate 12, the synthetic resin waste whose slipping rotation is inhibited in the bottom portion is crushed by the large number of the hammers 19.

Further, on a lower surface of the bottom plate 11 of the casing 1, a heater 13 is attached, and at the time of coldness or at the time of start-up, increases a temperature in the separation chamber 2 from a normal temperature to an exfoliation temperature less than a melting temperature of the synthetic resin. As the heater 13, in addition to an electric heater, a steam-heating heater may be used. In order to control the temperature in the separation chamber 2, a temperature controller 10 is provided. The temperature controller 10 controls the heater 13 and a water sprinkler 6 so that the temperature in the separation chamber 2 during operation becomes the exfoliation temperature at which the synthetic resin and the metal film of the synthetic resin waste can be exfoliated.

This exfoliation temperature is a temperature at which the synthetic resin and the metal film adhering to the synthetic resin are exfoliated due to a difference in thermal expansion coefficient between the metal film and the synthetic resin when the synthetic resin and the metal film are agitated and crushed in the separation chamber 2, the temperature at which the synthetic resin and the metal film are exfoliated without generating a mass. In addition, this exfoliation temperature is less than the melting temperature of the synthetic resin, and is set to be a temperature at which the metal film is exfoliated from the synthetic resin in accordance with the synthetic resin waste.

For example, in a case where the synthetic resin waste is a PTP in which PVC (polyvinyl chloride) and an aluminum foil are used, the exfoliation temperature is approximately 90°C to 110°C. In addition, this exfoliation temperature is also a temperature close to a heat seal temperature generated on a sealing surface when an aluminum foil is placed over blister-formed PVC and the aluminum foil and the PVC are bonded by heat sealing at the time of manufacturing the PTP.

In addition, for example, in a case of synthetic resin waste in which a Ni (nickel) foil is adhered onto a PET (polyethylene terephthalate) sheet, or synthetic resin waste in which a Ni evaporation film is evaporated on a PET sheet, the exfoliation temperature is set to be approximately 200°C to approximately 250°C. In addition, for example, in a case of synthetic resin waste in which a Ni evaporation film is evaporated on a PE (polyethylene) sheet, the exfoliation temperature is set to be approximately 100°C to approximately 120°C. The exfoliation temperatures in accordance with the synthetic resin are also a temperature at which a thermal expansion coefficient of the synthetic resin becomes maximum (temperature immediately before a thermoplastic synthetic resin starts melting), extension of the synthetic resin with respect to the metal film is maximized, and the synthetic resin and the metal film are efficiently exfoliated.

When the hammer rotor 16 is driven and rotated and agitation and crushing of the synthetic resin waste put into the separation chamber 2 progress, friction heat is generated due to friction resistance between the hammer rotor 16 and the synthetic resin waste, and the temperature in the separation chamber 2 is easily increased exceeding the exfoliation temperature. Therefore, the water sprinkler 6 that sprinkles water when the temperature in the separation chamber 2 is increased exceeding the exfoliation temperature, in order to lower the temperature in the chamber is disposed in an upper portion of the casing 1.

Further, in an upper portion of the separation chamber 2, a temperature sensor 7 is attached, and a detection signal from the temperature sensor 7 is input to the input side of the temperature controller 10. The heater 13 and a valve of the water sprinkler 6 are connected to the output side of the temperature controller 10. By an action of the temperature controller 10, the temperature in the separation chamber 2 is held at the exfoliation temperature.

The temperature controller 10 may be a manual temperature controller to be manually operated, or may be an automatic temperature controller in which a temperature control circuit is incorporated. In a case of the manual temperature controller, the temperature controller 10 includes an indicator that indicates the temperature in the separation chamber 2 based on a temperature signal sent from the temperature sensor 7. While watching the indicator, an operator adjusts power distribution to the heater 13 and adjusts the valve of the water sprinkler 6 to maintain the exfoliation temperature. In a case of the automatic temperature controller, the temperature control circuit automatically performs temperature control so that the temperature in the separation chamber 2 is held at the exfoliation temperature based on the temperature signal sent from the temperature sensor 7.

When the hammer rotor 16 is driven and rotated continuously for a certain amount of time, even after power distribution to the heater 13 is turned off, the temperature in the separation chamber 2 is easily increased exceeding the exfoliation temperature by the friction heat due to the friction resistance between the synthetic resin waste and the rotor. In this case, water is sprinkled into the separation chamber 2 from the water sprinkler 6, the temperature is lowered, and the temperature in the separation chamber 2 is held at the exfoliation temperature. Thereby, it is prevented that the temperature in the separation chamber 2 is excessively increased and becomes a temperature exceeding the exfoliation temperature resulting in the synthetic resin waste becoming a mass and a separation failure of the metal film and the synthetic resin occurs.

As shown in FIG. 1, in one side wall portion of the casing 1, a discharge port 9 is provided to have an opening in a square shape. Further, on the outside of the discharge port 9, a rectangular box-shaped resin recovery chamber 4 is formed. In the resin recovery chamber 4, a metal recovery box 3 is fitted from an upper portion while being capable of being elevated and lowered. In the metal recovery box 3, a perforated plate (screen) 3a is provided in a side wall portion on the separation chamber 2 side.

During an action of the separation apparatus, after the synthetic resin waste is crushed and heated up to the exfoliated temperature and the crushed metal film and synthetic resin are separated from each other, air of the separation chamber 2 is suctioned into the metal recovery box 3 through the perforated plate 3a. Thereby, the metal film in the separation chamber 2 passes through the perforated plate 3 from the separation chamber 2 and enters the metal recovery box 3, the synthetic resin in the separation chamber 2 remains in the separation chamber 2, and the remaining synthetic resin is taken out by a discharge conveyor 5 provided in a bottom portion of the resin recovery chamber 4 in the structure.

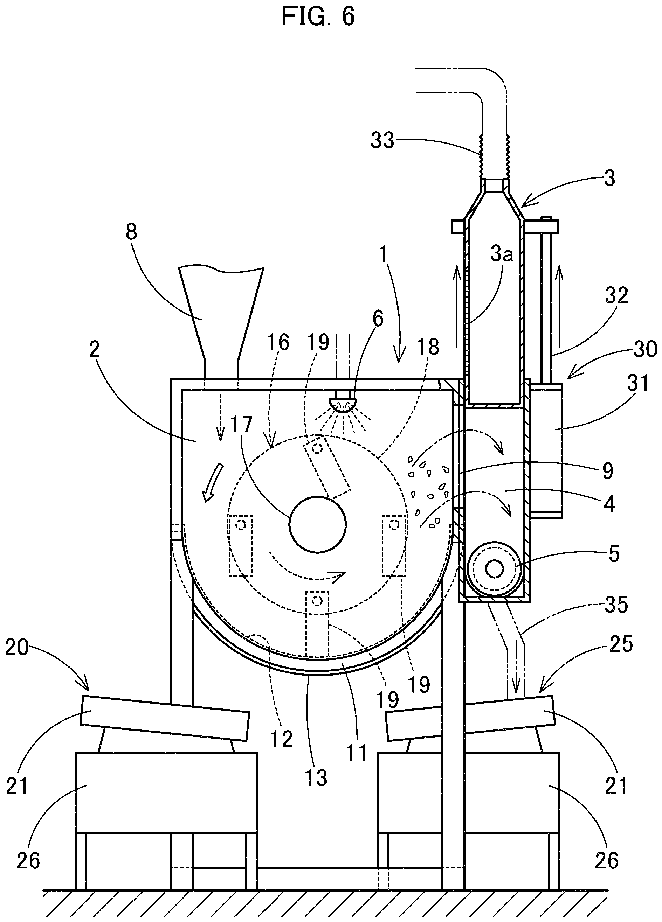

For this, after the metal film is suctioned, as shown in FIG. 6, the metal recovery box 3 is elevated, the synthetic resin after exfoliation is placed into the resin recovery chamber 4 facing the discharge port 9 of the separation chamber 2, and the synthetic resin after exfoliation is introduced onto the discharge conveyor 5 in the bottom portion. The discharge conveyor 5 is disposed horizontally in the bottom portion of the resin recovery chamber 4, the synthetic resin after exfoliation from which the metal film is already separated is collected, and the synthetic resin is discharged from a leading end portion of the discharge conveyor 5. As the discharge conveyor 5, a screw conveyor can be used. However, it is also possible to use conveyors having other structures.

Meanwhile, on the upper side of the discharge conveyor 5 in the resin recovery chamber 4, the metal recovery box 3 is fitted while being capable of being elevated and lowered. As shown in FIG. 4, in the metal recovery box 3, an opening portion that has an opening on the discharge port 9 side is provided, and the punching-metal-shaped or mesh-shaped perforated plate 3a in which a large number of holes are provided is attached to the opening portion to cover the opening. The perforated plate 3a may be a mesh-shaped screen. A size of the holes of the perforated plate 3a is appropriately set based on a type of the metal film and a type of the synthetic resin so that only the metal film passes through but the synthetic resin does not pass through the perforated plate 3a. An upper portion of the metal recovery box 3 becomes a loosely pointed shape and projects upward from the upper portion of the resin recovery chamber 4, and a flexible duct 33 is connected to a leading end of the pointed portion.

A blower 34 is connected to the flexible duct 33 as in FIG. 1. By suctioning of the blower 34, the metal film in the separation chamber 2 is conveyed to the first sieve device 20 to be described later through an interior of the metal recovery box 3 by the flexible duct 33. The perforated plate 3a in the metal recovery box 3 is formed to have such roughness of holes that the crushed and exfoliated metal film can pass through and the synthetic resin cannot pass through the perforated plate 3a. Thereby, during operation of the separation apparatus, the crushed and separated metal film is suctioned into the metal recovery box 3, and the synthetic resin after exfoliation remains in the separation chamber 2, and at the end, is introduced to the resin recovery chamber 4 and discharged from the discharge conveyor 5.

As shown in FIGS. 1 and 2, in an outside wall portion of the resin recovery chamber 4, an elevating and lowering device 30 that elevates and lowers the metal recovery box 3 is provided. The metal recovery box 3 is capable of being elevated and lowered from a lowering end position of FIG. 1 to an elevating end position of FIG. 6 by the elevating and lowering device 30. At the lowering end position of FIG. 1, the perforated plate 3a of the metal recovery box 3 is at a position of facing the discharge port 9 of the separation chamber 2. At the elevating end position of FIG. 6, the metal recovery box 3 stops in a state where a bottom portion of the metal recovery box 3 is fitted in the upper portion of the resin recovery chamber 4.

Thereby, as in FIG. 6, separation and recovery of the metal film are substantially finished. When the metal recovery box 3 is placed at the elevating position, the resin recovery chamber 4 communicates with an interior of the separation chamber 2 through the discharge port 9, and following rotation of the hammer rotor 16, the synthetic resin in the separation chamber 2 is fed out into the resin recovery chamber 4, and discharged to an exterior through the discharge conveyor 5 of the bottom portion. A duct 35 is connected to the leading end discharge side of the discharge conveyor 5, and the synthetic resin is fed out to the second sieve device 25 through the duct 35.

In the elevating and lowering device 30 of the metal recovery box 3, two fluid pressure cylinders 31 are attached facing upward, the upper portion of the metal recovery box 3 is coupled to leading end parts of piston rods 32 of the fluid pressure cylinders 31, and the metal recovery box 3 is elevated and lowered with predetermined strokes. As the elevating and lowering device 30, in addition to the fluid pressure cylinders, it is also possible to use an elevating and lowering mechanism by a motor and a screw shaft.

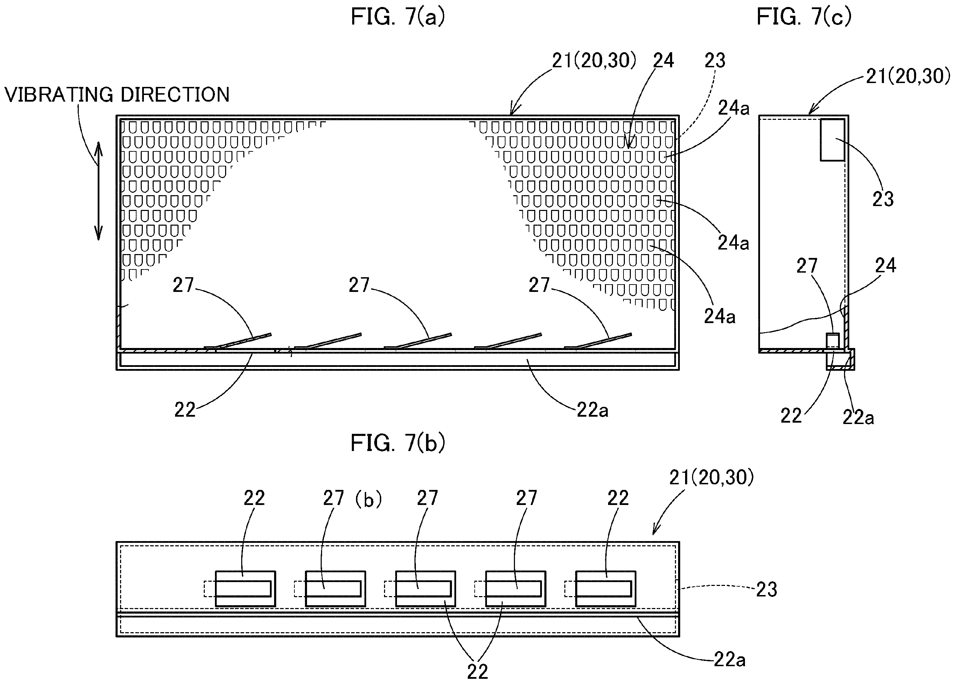

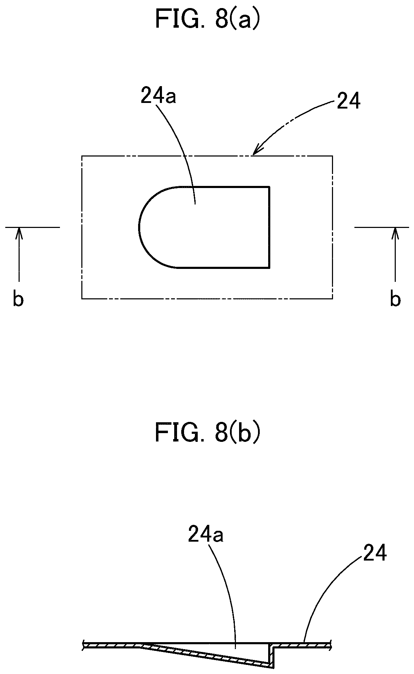

For the first sieve device 20 that removes foreign substances from the metal film after separation and the second sieve device 25 that removes foreign substances from the synthetic resin after separation, a sieve box 21 of the same structure shown in FIGS. 7 and 8 is used. As shown in FIGS. 7 and 8, each of the first sieve device 20 and the second sieve device 25 is configured such that the shallow sieve box 21 formed in a rectangular parallelepiped is attached onto a vibration device 26. The vibration device 26 of each of the first sieve device 20 and the second sieve device 25 vibrates the sieve box 21 in a horizontal direction, and sifts the metal film or synthetic resin after exfoliation. The vibration device 26 is configured such that rotation of a motor is changed to horizontal vibration by rotation of a cam member and an action of a cam follower, and vibrates the sieve box 21 attached onto the vibration device 26 in the horizontal direction.

The first sieve device 20 including such a vibration device 26 and the sieve box 21 removes the residual synthetic resin from the separated metal film by sifting. The second sieve device 25 sifts the separated synthetic resin and separates and removes the metal film.

As shown in FIG. 7, on a bottom plate of the sieve box 21, an embossed plate 24 is provided, and in the embossed plate 24, a large number of embossed portions 24a are disposed in parallel to a vibrating direction of the sieve box 21. The sieve box 21 includes the embossed plate 24 having a rectangular plane and the short side and the long side. As shown in FIG. 7(a), a vibrating direction of the sieve box 21 is the short side direction of the rectangle, that is, the up and down direction of FIG. 7(a).

As shown in FIG. 8, each of the embossed portions 24a is formed in a shape that the embossed portion 24a becomes gradually deeper from a leading end (left end) and deepest at a terminal end (right end), and at the terminal end, a recessed surface rises up substantially vertically. The shape of the embossed portion 24a can be an arbitrary shape such as a circular leading end and a triangular leading end. In addition, the embossed portion 24a has a size that the crushed and exfoliated metal film comes through, for example, a short width is 3 mm, a long width is 6 mm, and a depth is approximately 3 mm.

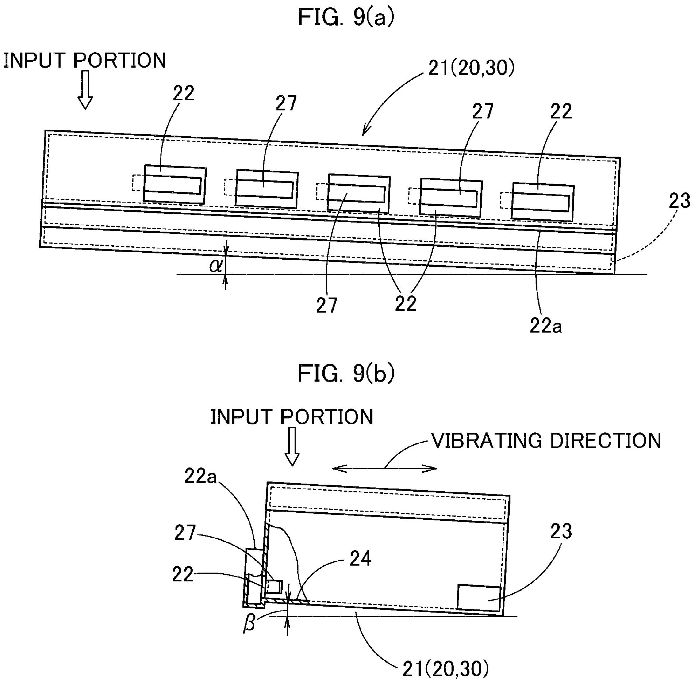

As shown FIG. 7(a), a resin discharge port 23 is provided in one end portion in one side wall portion (short side) of the sieve box 21. The resin discharge port 23 is provided in the vicinity of one corner portion of the sieve box 21. At the time of installing the sieve box 21, as shown in FIG. 9(b), the sieve box 21 is installed while being inclined by an inclination angle β with respect to a horizontal line so that a position of this resin discharge port 23 becomes the lowest position. That is, at the time of installing the sieve box 21, the side where the metal film from the flexible duct 33 is put in is a left end portion of FIG. 7(a). At the time of installing the sieve box 21, as shown in FIG. 9(a), the sieve box 21 is installed while being inclined by α degrees with respect to a horizontal line so that this left end portion is the highest position. Thereby, the remaining synthetic resin is discharged through this resin discharge port 23 at the time of a sifting action, and fed to a predetermined recovery box installed on the outside.

Meanwhile, in one side wall portion (long side) of the sieve box 21, as shown in FIG. 7, a large number of metal discharge ports 22 are arranged side by side along the side wall portion of the long side, and on the outside of the metal discharge ports 22, a metal recovery gutter 22a is provided. At the time of installing the sieve box 21, as shown in FIG. 9(b), the sieve box 21 is installed while being inclined by the angle β so that the long-side side of this metal discharge ports 22 is a higher position than the opposite long-side side.

Meanwhile, regarding inclination on the front surface side of the sieve box 21, as shown in FIG. 9(a), the sieve box 21 is installed so that the opposite input side (resin discharge port 23 side) is lower. However, since the vibrating direction of the sieve box 21 is the short direction, by the sifting action, the metal film on the embossed plate 24 is moved to the opposite resin discharge port side by vibration and discharged from the metal discharge ports 22. After that, the remaining metal film enters the metal recovery gutter 22a, and is fed to a predetermined recovery box, etc. from the metal recovery gutter 22a.

Next, a metal film and resin separation method to be implemented by using the metal film and resin separation apparatus of the above configuration will be described.

When the separation apparatus is started up, the hammer rotor 16 is driven and rotated at speed of approximately 500 to 750 rpm by drive of a drive motor (not shown). At the same time, the blower 34 is started up, and by an operation of the blower 34, air in the separation chamber 2 is suctioned through the metal recovery box 3 and the flexible duct 33.

The synthetic resin waste provided with the metal film, for example, waste such as a PTP provided with an aluminum foil, a PET sheet or film provided with a Ni foil, a PET sheet or film provided with a Ni evaporation film, and a PE sheet provided with a Ni evaporation film is put into the separation chamber 2 from the waste input port 8.

The rotation speed of the hammer rotor 16 in the separation chamber 2 is controlled to be high speed in a case where the input synthetic resin waste provided with the metal film is large and thick, and to be low speed in a case where the synthetic resin waste is thin and small.

The hammer rotor 16 is rotated in the direction shown by an arrow of FIG. 1. By heating of the heater 13, the temperature in the separation chamber 2 of the casing 1 is gradually increased from a normal temperature. The temperature controller 10 controls the temperature in the separation chamber 2 so that the temperature in the separation chamber 2 becomes the exfoliation temperature. The temperature in the separation chamber 2 is increased by an action of the heater 13 and also by the friction resistance of the synthetic resin waste in the separation chamber 2 following the rotation of the hammer rotor 16. In the separation chamber 2, the temperature in the separation chamber 2 is remarkably increased by the friction heat due to the friction resistance between the synthetic resin waste and the hammer rotor 16 and by the friction heat due to the friction resistance between the synthetic resin waste.

The temperature controller 10 manually or automatically performs control so that the temperature in the separation chamber 2 is held at the preliminarily-set exfoliation temperature based on the temperature in the separation chamber 2 detected by the temperature sensor 7. In a case where the temperature in the separation chamber 2 exceeds the exfoliation temperature, the valve of the water sprinkler 6 is adjusted to be opened or closed, water is sprinkled from the water sprinkler 6 into the separation chamber 2, and the temperature inside is lowered.

The input synthetic resin waste is crushed while being agitated by the hammers 19 of the hammer rotor 16. By such rotation and agitation of the hammer rotor 16, a temperature of the crushed synthetic resin waste provided with the metal film is gradually increased to the exfoliation temperature. At this time, the synthetic resin having a thermal expansion coefficient approximately twice to approximately six times that of the thermal expansion coefficient of the metal film is largely extended with respect to the metal film, and a sealing surface of the metal film and the synthetic resin becomes very easily exfoliated. Therefore, the metal film and the synthetic resin which are crushed and agitated are easily exfoliated and separated from each other. In addition, the exfoliation temperature at this time is also a temperature at which the thermal expansion coefficient of the synthetic resin becomes maximum (temperature immediately before a thermoplastic synthetic resin starts melting), extension of the synthetic resin with respect to the metal film is maximized, and the synthetic resin and the metal film are efficiently exfoliated.

Further, for example, as in the PTP, in a case where the metal film and the synthetic resin are heat-sealed at the time of manufacture, a heat seal temperature of the metal film and the synthetic resin is close to the exfoliation temperature. Thus, the sealing surface becomes furthermore easily exfoliated, and the metal film is efficiently exfoliated and separated from the synthetic resin.

In this way, the metal film of the input synthetic resin waste is crushed and also agitated, and gradually separated from the synthetic resin. At this time, the temperature of the separation chamber 2 is controlled by the action of the temperature controller 10 so as not to exceed the exfoliation temperature. Thus, a failure that the synthetic resin melts by heat and becomes a mass does not occur, and separation of the metal film and the synthetic resin efficiently progresses.

In addition, when the hammer rotor 16 is rotated and operation of the separation apparatus is continued for a certain amount of time, and when the temperature in the separation chamber 2 is increased exceeding the exfoliation temperature by the friction heat of the synthetic resin waste, water is accordingly sprinkled from the water sprinkler 6 by the action of the temperature controller 10, the temperature in the separation chamber 2 is lowered by this water sprinkling, and the temperature in the separation chamber 2 is controlled to be substantially the exfoliation temperature.

In addition, at this time, when the humidity in the separation chamber 2 is increased by water sprinkling, humidity expansion occurs in the synthetic resin, a synthetic resin film or sheet becomes further easily extended with respect to the metal film. In addition, by an increase in the humidity in the separation chamber 2, generation of static electricity which is easily generated in the separation chamber 2 is prevented, and adherence of the metal film and the synthetic resin waste by static electricity is prevented.

As described above, the synthetic resin waste put into the separation chamber 2 from the waste input port 8 such as the PTP, and the synthetic resin sheet or film provided with the metal film is crushed while being agitated by the rotation of the hammer rotor 16 in the separation chamber 2, and the temperature of the synthetic resin waste is increased to the exfoliation temperature following the heating by the heater 13, etc. Since that temperature is less than the melting temperature of the synthetic resin, a mass of the synthetic resin is not generated, the sealing surface of the metal film and the synthetic resin is easily exfoliated due to the difference in the thermal expansion coefficient between the metal film and the synthetic resin, and the metal film and the synthetic resin are separated from each other.

At this time, since the interior of the separation chamber 2 is suctioned by the blower 34 through the metal recovery box 3, the relatively-small and light metal film exfoliated, crushed, and contracted by heat easily passes through the perforated plate 3a and enters the metal recovery box 3. Meanwhile, the relatively-large and heavy synthetic resin does not pass through the perforated plate 3a and remains in the separation chamber 2. The metal film suctioned into the metal recovery box 3 is fed from there to the first sieve device 20 through the flexible duct 33. Small pieces of part of the synthetic resin passed through the perforated plate 3a are also fed to the first sieve device 20 together with the metal film.

At the time point when the hammer rotor 16 is rotated for a certain amount of time, the input synthetic resin waste is crushed, and the metal film is exfoliated and separated, the elevating and lowering device 30 is operated and the metal recovery box 3 is elevated to a position of FIG. 6. Thereby, as shown in FIG. 6, the perforated plate 3a is elevated, and an interior of the resin recovery chamber 4 communicates with the interior of the separation chamber 2 through the discharge port 9. In this state, the hammer rotor 16 in the separation chamber 2 continues to be rotated in the anti-clockwise direction of FIG. 6, and the synthetic resin being rotated and agitated in the separation chamber 2 gradually enters the resin recovery chamber 4 from the interior of the separation chamber 2 through the discharge port 9. The synthetic resin having entered the resin recovery chamber 4 goes onto the discharge conveyor 5 in the bottom portion, and by an action of the discharge conveyor 5, is fed from the discharge conveyor 5 to the second sieve device 25 through the duct 35. At this time, the metal film remaining in the separation chamber 2 is also fed to the second sieve device 25 together with the synthetic resin.

The metal film fed from the metal recovery box 3 through the flexible duct 33 is put into the sieve box 21 of the first sieve device 20 and sifted. As shown in FIGS. 7(a) and 9(b), the sieve box 21 of the first sieve device 20 is vibrated in the short width direction, and the metal film put in at the highest position of the sieve box 21 is moved to the metal discharge port 22 side of the sieve box 21 by vibration of the embossed plate 24 of the sieve box 21. That is, the finely-contracted metal film is moved to the metal discharge port 22 side by the embossed portions 24a of the embossed plate 24, enters the metal recovery gutter 22a from the metal discharge ports 22, and is recovered from an end portion of the metal recovery gutter 22a into a predetermined container, etc.

Meanwhile, since the small pieces of the synthetic resin mixed into the metal film are larger than the metal film, the small pieces do not come through the embossed portions 24a but are moved toward the resin discharge port 23 on the lower side and recovered from the resin discharge port 23 into a predetermined container, etc.

Meanwhile, the synthetic resin having entered the resin recovery chamber 4, the synthetic resin being taken out by the discharge conveyor 5 is fed to the second sieve device 25 and sifted. The synthetic resin put in at the highest position in the sieve box 21 of the second sieve device 25 is, similar to the above description, moved toward the resin discharge port 23 on the lower side by a vibration action of the sieve, and recovered from the resin discharge port 23 into a predetermined container, etc.

Meanwhile, the finely-contracted metal film included there is moved to the metal discharge port 22 side by the embossed portions 24a of the embossed plate 24, enters the metal recovery gutter 22a from the metal discharge port 22, and is recovered from the end portion of the metal recovery gutter 22a into a predetermined container, etc. At this time, the separated synthetic resin is also sifted in the second sieve device 25 and the metal film is further separated from the synthetic resin.

In this way, the separated and recovered metal film is further fed to the first sieve device 20 and sifted, and the synthetic resin in the metal film is removed. Meanwhile, the separated and recovered synthetic resin is further fed to the second sieve device 25 and sifted, and the metal film in the synthetic resin is removed. Thus, it is possible to separate and recover the metal film and the synthetic resin with a very high separation rate.

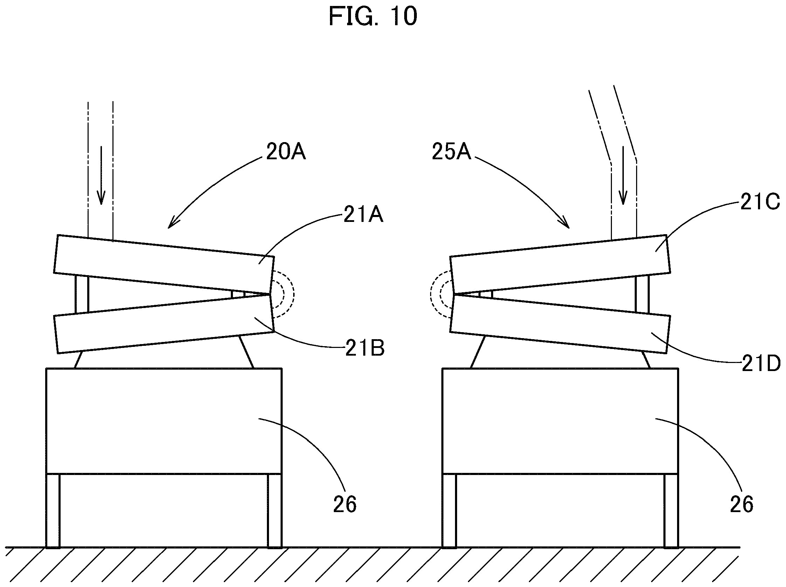

FIG. 10 shows a first sieve device 20A and a second sieve device 25A of another embodiment. Each of the first sieve device 20A and the second sieve device 25A is configured such that two-tiered upper and lower sieve boxes are attached onto a vibration device 26, and a metal film and a synthetic resin are sifted twice.

That is, in the first sieve device 20A, an upper sieve box 21A and a lower sieve box 21B are attached at positions overlapping the vibration device 26 so that directions of the sieve boxes are opposite to each other, that is, as in FIG. 10, the lower sieve box 21B is placed on the lower side of the upper sieve box 21A, and has the input side placed on the right side and the resin discharge port side placed on the left side. It is noted that in FIG. 10, it looks as if the inclination directions of the upper sieve box 21A and the lower sieve box 21B are opposite to each other. However, the directions of the sieve boxes are opposite to each other, and the inclinations of the upper sieve box 21A and the lower sieve box 21B in which the input side is high and the resin discharge port side is low are the same as each other.

In addition, in the second sieve device 25A, an upper sieve box 21C and a lower sieve box 21D are also attached onto the vibration device 26 so that directions of the sieve boxes are opposite to each other, that is, as in FIG. 10, the lower sieve box 21D is placed on the lower side of the upper sieve box 21C, and has the input side placed on the left side and the resin discharge port side placed on the right side. Similar to the above description, inclinations of the upper sieve box 21A and the lower sieve box 21B in which the input side is high and the resin discharge port side is low are the same as each other. Thereby, after foreign substances are separated once by sifting in the upper sieve box 21A and the upper sieve box 21C, the metal film or the synthetic resin is placed into the lower sieve box 21B and the lower sieve box 21D and sifted again, so that foreign substances are separated with further high separation performance.

By using the two-tiered type of sieve devices, in the first sieve device 20A, after the metal film is put into the upper sieve box 21A and the metal film is sifted once, the residual synthetic resin is put into the lower sieve box 21B and sifted again. Thus, it is possible to further enhance the separation performance of the metal film and the synthetic resin. Similarly, in the second sieve device 25A, after the synthetic resin after exfoliation is put into the upper sieve box 21C and the synthetic resin after exfoliation is sifted once, the residual synthetic resin is put into the lower sieve box 21D and sifted again. Thus, it is possible to further enhance the separation performance of the metal film and the synthetic resin.

In this way, by crushing the synthetic resin waste in the separation chamber 2 by the rotation of the hammer rotor 16 and heating the interior of the separation chamber 2 to the preliminarily-set exfoliation temperature, the synthetic resin largely extended due to the difference in the thermal expansion coefficient between the metal film and the synthetic resin is easily exfoliated and separated from the synthetic resin. Since the exfoliation temperature is less than the melting temperature of the synthetic resin, a mass of the synthetic resin is not generated, and the metal film is exfoliated and separated from the synthetic resin with high separability.

Further, the separated metal film is sifted in the sieve device after being taken out from the separation chamber 2 through the perforated plate 3a, and the residual synthetic resin is further separated from the metal film. The synthetic resin after exfoliation is also sifted in the sieve device, and the metal film is further separated from the synthetic resin. Thereby, it is possible to separate the metal film and the synthetic resin from each other with higher separation performance (separation rate), and efficiently separate and recover the metal film and the synthetic resin. In addition, in the separation chamber 2, by water sprinkling, the generation of static electricity which is easily generated in the synthetic resin waste is suppressed, the adherence of the metal film and the synthetic resin due to static electricity is eliminated, and it is possible to facilitate the separation of the metal film and the synthetic resin.

It is noted that in the above embodiment, the metal film after crushing and separation taken out from the metal recovery box 3 and the synthetic resin after crushing and separation taken out from the resin recovery chamber 4 are respectively sifted in a one-tiered or two-tiered sieve devices, and foreign substances are respectively removed from the metal film and the synthetic resin. However, depending on a type of the metal film and a type of the synthetic resin, there is sometimes a case where the sieve devices cannot be effectively used. That is, the case includes a case where the metal film is, for example, an evaporation film, the crushed and separated metal film becomes very thin, light in weight, and fine, and therefore it is difficult to perform selection by the sieve devices.

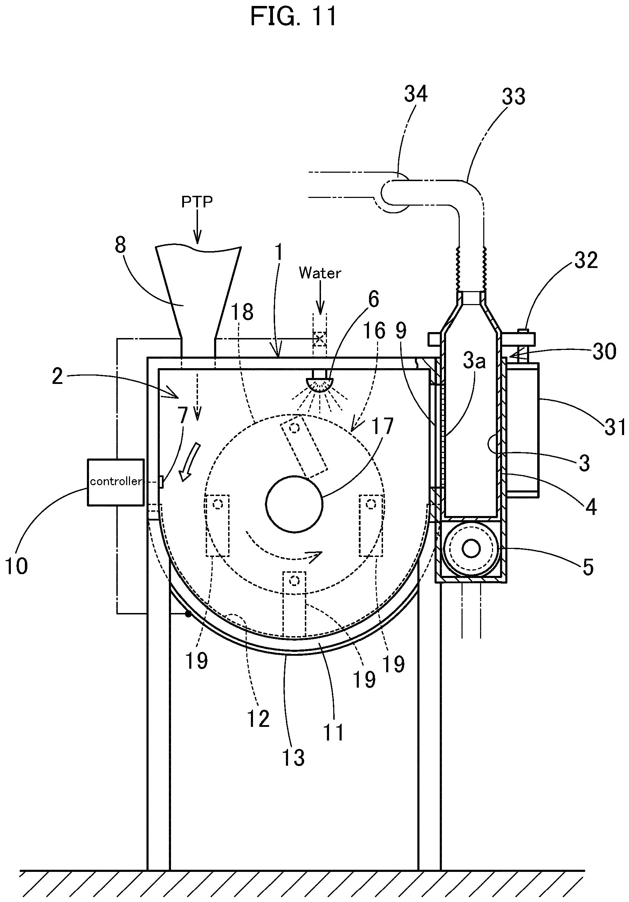

In such a case, a hole diameter of the perforated plate 3a provided in the metal recovery box 3 is adjusted in accordance with an outer diameter of the metal film so that the perforated plate 3a is made to have an optimal hole diameter or mesh, and as shown in FIG. 11, at the time of detaching the sieve devices and suctioning the crushed and separated metal film to the metal recovery box 3, an action is made so that the fine metal film in the separation chamber 2 is suctioned into the metal recovery box 3 through the optimal perforated plate 3a with a sufficient suctioning force for a certain long period of time.

Thereby, it is possible to take out the metal film from a duct on the discharge side of the blower 34, take out the synthetic resin remaining in the separation chamber 2 from the discharge side of the discharge conveyor 5 after that, and efficiently separate and recover the metal film and the synthetic resin without using the sieve devices.

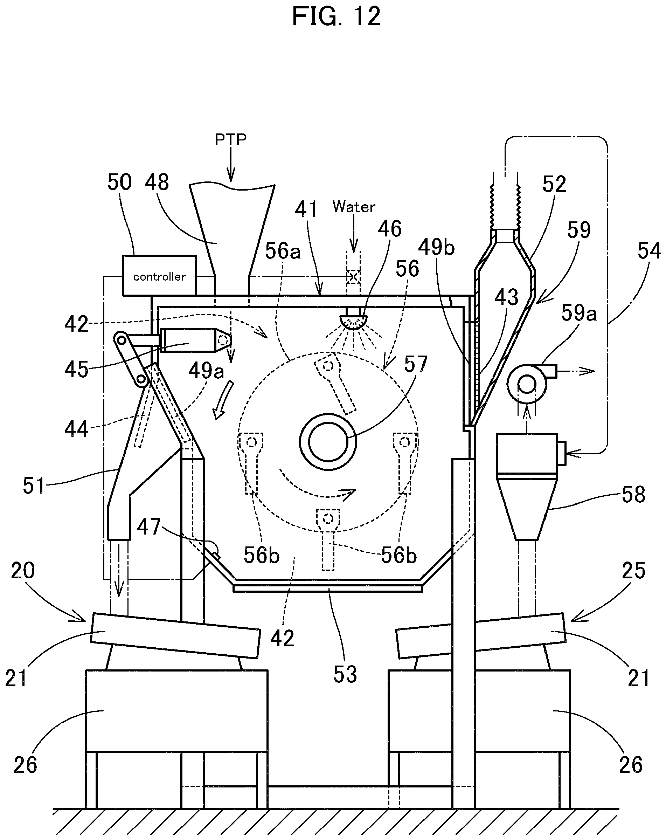

FIG. 12 shows a metal film and resin separation apparatus of further another embodiment. This separation apparatus is configured such that synthetic resin waste in which a metal film adheres to a surface of a synthetic resin such as a PTP is put into a separation chamber 42 in a casing 41, a hammer rotor 56 is rotated in the separation chamber 42, the metal film and the synthetic resin are separated and recovered, and further, by a first sieve device 20 and a second sieve device 25, the metal film and the synthetic resin after separation are respectively sifted, and residual foreign substances are separated.

As shown in FIG. 12, the casing 41 of the separation apparatus is formed to have a square bottom portion having a rectangular plane and a substantially octagonal section, in which an upper surface is closed by a metal plate, and a hopper-shaped waste input port 48 is provided on the upper surface in order to put in the synthetic resin waste. In the separation chamber 42 in the casing 41, the hammer rotor 56 is pivotably supported while a rotation shaft 57 of the hammer rotor 56 is arranged in a horizontal direction, and the hammer rotor 56 is driven and rotated at predetermined speed by a motor.

Similar to the example of FIG. 3, in the hammer rotor 56, a large number of discs 56a are attached to the rotation shaft 57 at predetermined intervals, four hammers 56b are rotatably and pivotably supported on the circumference of each of the discs 56a at intervals of 90 degrees, and the rotation shaft 57 is driven and rotated by the motor, not shown. As the hammers 56b, it is possible to use a plate-shaped hammer of a plate shape or a rod-shaped hammer of a rod shape.

In a case where the rod-shaped hammers 56b are used, and for example, when the synthetic resin waste is as small as a PTP, it is possible to separate and take out an aluminum foil and a synthetic resin without excessively finely crushing the aluminum foil. Meanwhile, in a case where the synthetic resin waste is a relatively large sheet provided with a nickel foil, etc., there is a need to crush the synthetic resin sheet, and a plate-shaped hammer provided with a blade is therefore used as the hammers 56b.

In the hammer rotor 56, by drive and rotation of the rotation shaft 57, a large number of the hammers 56b are driven and rotated. However, basically, the metal film and the synthetic resin of the synthetic resin waste are exfoliated and separated due to a difference in expansion coefficient between the metal film and the synthetic resin when a temperature is increased. Thus, by rotation of the large number of the hammers 56b, the synthetic resin waste is moderately agitated and separated in the separation chamber 42.

Further, on a lower surface of the bottom plate of the casing 41, a heater 53 is attached, and at the time of coldness or at the time of start-up, increases a temperature in the separation chamber 42 from a normal temperature to an exfoliation temperature less than a melting temperature of the synthetic resin. As the heater 53, in addition to an electric heater, a steam-heating heater may be used. In order to control the temperature in the separation chamber 42, a temperature controller 50 is provided. The temperature controller 50 controls the heater 53 and a water sprinkler 46 so that the temperature in the separation chamber 42 during operation becomes the exfoliation temperature at which the synthetic resin and the metal film of the synthetic resin waste can be exfoliated.

This exfoliation temperature is an optimal temperature for the metal film and the synthetic resin to be exfoliated without generating a mass when the synthetic resin and the metal film adhering to the synthetic resin are agitated and crushed in the separation chamber 42. In addition, this exfoliation temperature is less than the melting temperature of the synthetic resin, and a setting temperature of the temperature controller 50 is set to be a temperature at which the metal film is exfoliated from the synthetic resin based on the difference in the thermal expansion coefficient mainly in accordance with a type of the metal film or the synthetic resin.

For example, in a case where the synthetic resin waste is a PTP in which PVC (polyvinyl chloride) and an aluminum foil are used, the exfoliation temperature is approximately 90°C to 110°C. In addition, this exfoliation temperature is also a temperature close to a heat seal temperature generated on a sealing surface when an aluminum foil is placed over blister-formed PVC and the aluminum foil and the PVC are bonded by heat sealing at the time of manufacturing the PTP.

In addition, for example, in a case of synthetic resin waste in which a Ni (nickel) foil is adhered onto a PET (polyethylene terephthalate) sheet, or synthetic resin waste in which a Ni evaporation film is evaporated on a PET sheet, the exfoliation temperature is set to be approximately 200°C to approximately 250°C. In addition, for example, in a case of synthetic resin waste in which a Ni evaporation film is evaporated on a PE (polyethylene) sheet, the exfoliation temperature is set to be approximately 100°C to approximately 120°C.

The exfoliation temperatures in accordance with such synthetic resin waste is also a temperature at which a thermal expansion coefficient of the synthetic resin becomes maximum (temperature immediately before a thermoplastic synthetic resin starts melting), extension of the synthetic resin with respect to the metal film is maximized, and the synthetic resin and the metal film are efficiently exfoliated.

When the hammer rotor 56 is driven and rotated and agitation and crushing of the synthetic resin waste put into the separation chamber 42 progress, friction heat is generated due to friction resistance between the hammer rotor 56 and the synthetic resin waste, and the temperature in the separation chamber 42 is easily increased exceeding the exfoliation temperature. Therefore, the water sprinkler 6 that sprinkles water when the temperature in the separation chamber 42 is increased exceeding the exfoliation temperature, in order to lower the temperature in the separation chamber 42 is disposed in an upper portion in the separation chamber 42 of the casing 41.

Further, in the separation chamber 2, a temperature sensor 47 is attached, and a detection signal from the temperature sensor 47 is input to the input side of the temperature controller 50. The heater 53 and a valve of the water sprinkler 46 are connected to the output side of the temperature controller 50. By an action of the temperature controller 50, the temperature in the separation chamber 42 is held at the exfoliation temperature.

The temperature controller 50 may be a manual temperature controller to be manually operated, or may be an automatic temperature controller in which a temperature control circuit is incorporated. In a case of the manual temperature controller, the temperature controller 50 includes an indicator that indicates the temperature in the separation chamber 42 based on a temperature signal sent from the temperature sensor 47. While watching the indicator, an operator adjusts power distribution to the heater 53 and adjusts the valve of the water sprinkler 46 to maintain the temperature at the exfoliation temperature. In a case of the automatic temperature controller, the temperature control circuit automatically performs temperature control so that the temperature in the separation chamber 42 is held at the exfoliation temperature based on the temperature signal sent from the temperature sensor 47.

When the hammer rotor 56 is driven and rotated continuously for a certain amount of time, even after power distribution to the heater 53 is turned off, the temperature in the separation chamber 2 is easily increased exceeding the exfoliation temperature by the friction heat due to the friction resistance between the synthetic resin waste and the rotor. In this case, water is sprinkled into the separation chamber 42 from the water sprinkler 46, the temperature is lowered, and the temperature in the separation chamber 42 is held at the exfoliation temperature. Thereby, it is prevented that the temperature in the separation chamber 42 is excessively increased and becomes a temperature exceeding the exfoliation temperature resulting in the synthetic resin waste becoming a mass or a separation failure of the metal film and the synthetic resin occurs.

As shown in FIG. 12, in one side wall portion of the casing 41, a resin discharge port 49a is provided, and further on the outside of the resin discharge port 49a, a resin discharge chute 51 is provided. In addition, a resin discharge door 44 is provided in the resin discharge port 49a, and the resin discharge door 44 is opened and closed by an action of a fluid pressure cylinder 45. During an action of the separation apparatus, at the time point when the synthetic resin waste is crushed and heated to the exfoliation temperature and the crushed metal film and synthetic resin are separated from each other, the resin discharge door 44 is opened, and the synthetic resin remaining in the separation chamber 42 is taken out to an exterior through the resin discharge chute 51.

Meanwhile, the fine metal film exfoliated from the synthetic resin in the separation chamber 42 is always suctioned and taken out from a suctioning metal discharge port 49b to the exterior through a metal discharge duct 52 during operation of the separation apparatus. A screen 43 or a perforated plate is provided in the metal discharge port 49b, the synthetic resin remains in the separation chamber 42, and only the exfoliated metal film is suctioned and discharged through the metal discharge duct 52. A size of holes in the screen 43 or the perforated plate is set in accordance with a type of the metal film and a type of the synthetic resin. A blower 59a of a suction device 59 is connected to the metal discharge duct 52 via a flexible duct 54, and the blower 59a suctions air in the separation chamber 42.

As shown in FIG. 12, the suction device 59 has the metal discharge duct 52, the flexible duct 54, and the blower 59a, and the blower 59a is connected via the flexible duct 54 and a cyclone separator 58. Thereby, the blower 59a of the suction device 59 feeds the air containing the metal film suctioned from an interior of the separation chamber 42 to the cyclone separator 58 through the metal discharge duct 52 and the flexible duct 54, and separates the metal film in the cyclone separator 58, and then the blower 59a exhausts the air to the exterior. The metal film separated in the cyclone separator 58 is fed to a sieve box 21 of the second sieve device 25 arranged on the lower side of the cyclone separator 58.

Meanwhile, on the lower side of the resin discharge chute 51 of the resin discharge port 49a, a sieve box 21 of the first sieve device 20 is disposed. The synthetic resin discharged from the resin discharge chute 51 (crushed synthetic resin from which the metal film is exfoliated) is fed to the sieve box 21 of the first sieve device 20. It is noted that it is also possible to feed the synthetic resin discharged from the resin discharge chute 51 to the first sieve device 20 by using a moving means such as a belt conveyor (not shown).

The first sieve device 20 and the second sieve device 25 shown in FIG. 12 are the same sieve devices as the sieve devices having the sieve box 21 of the structure shown in FIGS. 7 and 8. As shown in FIGS. 7 and 8, each of the first sieve device 20 and the second sieve device 25 is configured such that the shallow sieve box 21 formed in a rectangular parallelepiped is attached onto a vibration device 26. The vibration device 26 of each of the sieve devices vibrates the sieve box 21 in a horizontal direction, and sifts the metal film or synthetic resin after exfoliation. The vibration device 26 is configured such that rotation of a motor is changed to horizontal vibration by rotation of a cam member and an action of a cam follower, and vibrates the sieve box 21 attached onto the vibration device 26 in the horizontal direction.

The first sieve device 20 including such a vibration device 26 and the sieve box 21 sifts the taken-out synthetic resin and removes the residual metal film. The second sieve device 25 sifts the taken-out metal film and removes the residual synthetic resin. The configuration of the sieve box 21 is as shown in FIGS. 7 and 8 as described above, and description thereof will be omitted.

Next, a metal film and resin separation method to be implemented by using the metal film and resin separation apparatus of the above configuration will be described.

Synthetic resin waste provided with a metal film (for example, a PTP of PVC provided with an aluminum foil, etc.) is put into the separation chamber 42 from the waste input port 48.

In the separation apparatus, a drive motor (not shown) is started up, the hammer rotor 56 is driven and rotated, at the same time, the heater 53 is operated to heat, the blower 59a is started up, and air in the separation chamber 42 is suctioned through the metal discharge port 49b. Rotation speed of the hammer rotor 56 in the separation chamber 42 is made to be high speed in a case where the input synthetic resin waste provided with the metal film is large and thick, and to be low speed in a case where the synthetic resin waste is thin. The resin discharge door 44 is in a closed state, and the blower 59a of the suction device 59 performs a suctioning action.

The hammer rotor 56 is rotated in the anti-clockwise direction of FIG. 12, and the temperature in the separation chamber 42 of the casing 41 is controlled and heated to become the exfoliation temperature described above by the temperature controller 50. At the time of start-up of the separation apparatus, following an action of the heater 53 and rotation of the hammer rotor 56, a temperature of the synthetic resin waste in the separation chamber 42 is gradually increased from a normal temperature, and the temperature in the separation chamber 42 is increased by the friction heat due to the friction resistance between the synthetic resin waste and the hammer rotor 56 and by the friction heat due to the friction resistance between the synthetic resin waste.

The temperature controller 50 is manually or automatically operated so that the temperature in the separation chamber 42 is held at the preliminarily-set exfoliation temperature. In a case where the temperature in the separation chamber 42 detected by the temperature sensor 47 exceeds the set exfoliation temperature, the valve of the water sprinkler 46 is adjusted to be opened or closed, water is sprinkled from the water sprinkler 46 into the separation chamber 42, and the temperature inside is lowered.

The input synthetic resin waste is moderately crushed while being agitated by the hammers 56b of the hammer rotor 56, and the temperature of the synthetic resin waste is increased. At this time, when the temperature of the agitated and crushed synthetic resin waste provided with the metal film is increased to the exfoliation temperature by the friction heat and the heater 53, the synthetic resin having a thermal expansion coefficient approximately twice to approximately six times that of the metal film is largely extended with respect to the metal film, and the sealing surface of the metal film and the synthetic resin is easily exfoliated, and the crushed metal film and synthetic resin are separated from each other. In addition, the exfoliation temperature at this time is also a temperature at which the thermal expansion coefficient of the synthetic resin becomes maximum (temperature immediately before a thermoplastic synthetic resin starts melting), extension of the synthetic resin with respect to the metal film is maximized, and the synthetic resin and the metal film are efficiently exfoliated.

In addition, for example, as in the PTP, in a case where the metal film and the synthetic resin are heat-sealed at the time of manufacture, a heat seal temperature of the metal film and the synthetic resin is close to the exfoliation temperature. Thus, the sealing surface becomes easily exfoliated, and the metal film is efficiently exfoliated and separated from the synthetic resin.

In this way, the metal film of the input synthetic resin waste is gradually separated from the synthetic resin while being crushed and agitated. At this time, the temperature of the separation chamber 42 is controlled by the action of the temperature controller 50 so as not to exceed the exfoliation temperature. Thus, a failure that the synthetic resin melts by heat and becomes a mass does not occur, and separation of the metal film and the synthetic resin efficiently progresses.

In addition, when the hammer rotor 56 is rotated and the separation apparatus is operated for a certain amount of time, the temperature in the separation chamber 42 is increased by the friction heat of the synthetic resin waste. Thus, the temperature controller 50 is accordingly operated, water is sprinkled from the water sprinkler 46, and the temperature in the separation chamber 42 is controlled to be the set exfoliation temperature. At this time, when humidity in the separation chamber 42 is increased by water sprinkling, humidity expansion occurs in the synthetic resin, a synthetic resin film or sheet becomes further easily extended with respect to the metal film, and an exfoliating operation is facilitated.

The metal film exfoliated from the synthetic resin passes through the screen 43 from the metal discharge port 49b by suctioning by the blower 59a, is taken out from the separation chamber 42 via the metal discharge duct 52 and the flexible duct 54, and enters the cyclone separator 58. The metal film suctioned and taken out from the separation chamber 42 is separated from an air flow in the cyclone separator 58, placed into the sieve box 21 of the second sieve device 58, and sifted, and the remaining synthetic resin is removed from the metal film.

When the operation of the separation apparatus is implemented for a predetermined amount of time and exfoliation of the metal film and the synthetic resin is finished, the resin discharge door 44 is opened, and in that state, the hammer rotor 56 is driven and rotated at low speed, and the synthetic resin remaining in the separation chamber 42 is taken out from the resin discharge port 49a through the resin discharge chute 51. The synthetic resin taken out from the resin discharge chute 51 is fed to the sieve box 21 of the first sieve device 20 and sifted, and a remaining metal film remaining in the synthetic resin is removed. It is noted that although not shown in the figures, it is also possible to convey the synthetic resin sifted in the first sieve device 20 to another place through a duct by air conveying, etc., and place the synthetic resin into a flexible container, etc., and convey it.

In this way, by agitating and crushing the synthetic resin waste in the separation chamber 42 by the rotation of the hammer rotor 56 and heating the interior of the separation chamber 42 to the preliminarily-set exfoliation temperature, the synthetic resin largely extended due to the difference in the thermal expansion coefficient between the metal film and the synthetic resin is easily exfoliated and separated from the synthetic resin. Since the exfoliation temperature is less than the melting temperature of the synthetic resin, a mass of the synthetic resin is not generated, and the metal film is exfoliated and separated from the synthetic resin with high separability.

The separated metal film is sifted in the second sieve device 25 after being taken out from the separation chamber 42 through the screen 43, and the residual synthetic resin is further separated from the metal film. The synthetic resin after exfoliation is also sifted in the first sieve device 20, and the metal film is further separated from the synthetic resin. Thereby, it is possible to separate the metal film and the synthetic resin from each other with higher separation performance (separation rate), and efficiently separate and recover the metal film and the synthetic resin. In addition, in the separation chamber 42, by water sprinkling, generation of static electricity which is easily generated in the synthetic resin waste is suppressed, adherence of the metal film and the synthetic resin due to static electricity is eliminated, and it is possible to facilitate the separation of the metal film and the synthetic resin.

### Reference Signs List

- 1: Casing
- 2: Separation chamber
- 3: Metal recovery box
- 3a: Perforated plate
- 4: Resin recovery chamber
- 5: Discharge conveyor
- 6: Water sprinkler
- 7: Temperature sensor
- 8: Waste input port
- 9: Discharge port
- 10: Temperature controller
- 11: Bottom plate
- 12: Wave-shaped bottom plate
- 13: Heater
- 16: Hammer rotor
- 17: Rotation shaft
- 18: Disc
- 19: Hammer
- 20: First sieve device
- 20A: First sieve device
- 21: Sieve box
- 21A: Upper sieve box
- 21B: Lower sieve box
- 21C: Upper sieve box
- 21D: Lower sieve box
- 22: Metal discharge port
- 22a: Metal recovery gutter
- 23: Resin discharge port
- 24: Embossed plate
- 24a: Embossed portion
- 25: Second sieve device
- 25A: Second sieve device
- 26: Vibration device
- 30: Elevating and lowering device
- 31: Fluid pressure cylinder
- 32: Piston rod
- 33: Flexible duct
- 34: Blower
- 35: Duct

## Claims

1. A metal film and resin separation method of putting synthetic resin waste in which a metal film adheres to a synthetic resin into a separation chamber in a casing, rotating a hammer rotor in the separation chamber, and separating and recovering the metal film and synthetic resin, the metal film and resin separation method comprising:
a step of, while rotating the hammer rotor, increasing a temperature in the separation chamber to an exfoliation temperature ranging from a normal temperature to a temperature less than a melting temperature of the synthetic resin, the exfoliation temperature at which the metal film and the synthetic resin are separated from each other, and crushing the synthetic resin waste in the separation chamber; and
a step of, by sprinkling water from a water sprinkler into the separation chamber, holding the temperature in the separation chamber at the exfoliation temperature, and exfoliating the metal film from the synthetic resin.

2. The metal film and resin separation method according to Claim 1, comprising:
a step of taking out a metal film exfoliated from the synthetic resin and crushed from the separation chamber by suctioning through a perforated plate or a screen; and
taking out a synthetic resin crushed and remaining in the separation chamber from the separation chamber.

3. The metal film and resin separation method according to Claim 2, comprising:
a step of putting the metal film taken out from the separation chamber into a first sieve device, sifting the metal film, and separating a residual synthetic resin in the metal film; and
a step of taking out a synthetic resin from which the metal film is exfoliated, the synthetic resin being crushed, from the separation chamber, putting the synthetic resin into a second sieve device, sifting the synthetic resin, and separating a residual metal film from the synthetic resin.

4. The metal film and resin separation method according to Claim 3, wherein
after the metal film is put into a sieve box of the first sieve device and sifted, the residual synthetic resin is put again into another sieve box and sifted, and after the synthetic resin after exfoliation is put into a sieve box of the second sieve device and the synthetic resin after exfoliation is sifted, the residual synthetic resin is put again into another sieve box and sifted.

5. A metal film and resin separation apparatus that puts synthetic resin waste in which a metal film adheres to a synthetic resin into a separation chamber in a casing, crushes the synthetic resin waste in the separation chamber, and separates and recovers the metal film and synthetic resin, the metal film and resin separation apparatus comprising:
a heater attached to the casing, the heater that heats the separation chamber in temperature;
a water sprinkler that sprinkles water into the separation chamber;
a hammer rotor in which a disc is fixed to a rotation shaft axially supported to be driven to rotate in the separation chamber in a transverse direction to the axis, and a plurality of hammers are pivotably supported on the disc;
a discharge port provided in a side wall portion of the casing, the discharge port through which a crushed synthetic resin waste is discharged from the separation chamber;
a resin recovery chamber provided on the outside of the discharge port;
a metal recovery box provided in the resin recovery chamber to be capable of being elevated and lowered, the metal recovery box in which a metal film exfoliated from the synthetic resin is recovered from an interior of the separation chamber through a perforated plate;
an elevating and lowering device that elevates the metal recovery box from the resin recovery chamber to an exterior of the chamber;
a discharge conveyor provided in a bottom portion of the resin recovery chamber, the discharge conveyor that discharges a synthetic resin after exfoliation from which the metal film is already exfoliated; and
a temperature controller that, by controlling the heater and also controlling a water sprinkling amount of the water sprinkler, controls the temperature in the separation chamber to an exfoliation temperature which is higher than a normal temperature and less than a melting temperature of the synthetic resin, the exfoliation temperature at which the synthetic resin and the metal film are exfoliated.

6. The metal film and resin separation apparatus according to Claim 5, comprising:
a first sieve device that sifts the metal film after exfoliation taken out from the metal recovery box, and separates a residual synthetic resin in the metal film; and
a second sieve device that sifts the synthetic resin after exfoliation taken out through the discharge conveyor, and separates a residual metal film from the synthetic resin after exfoliation.

7. The metal film and resin separation apparatus according to Claim 6, wherein
two-tiered upper and lower sieve boxes are arranged in the first sieve device, and after the metal film is once put into the upper sieve box and the metal film is sifted, a residual synthetic resin is put into the lower sieve box and sifted again.

8. The metal film and resin separation apparatus according to Claim 6, wherein
two-tiered upper and lower sieve boxes are arranged in the second sieve device, and after the synthetic resin after exfoliation is once put into the upper sieve box and the synthetic resin after exfoliation is sifted, a residual synthetic resin is put into the lower sieve box and sifted again.

9. A metal film and resin separation apparatus that puts synthetic resin waste in which a metal film adheres to a synthetic resin into a separation chamber in a casing, crushes the synthetic resin waste in the separation chamber, and separates and recovers the metal film and synthetic resin, the metal film and resin separation apparatus comprising:
a heater attached to the casing, the heater that heats an interior of the separation chamber;
a water sprinkler provided in the separation chamber, the water sprinkler that sprinkles water into the separation chamber;
a hammer rotor disposed to be driven to rotate in the separation chamber in the casing, the hammer rotor in which a plurality of hammers are pivotably supported on a disc fixed in a transverse direction on a rotation shaft;
a resin discharge port provided in a side wall portion of the casing, the resin discharge port through which a crushed synthetic resin is discharged from the separation chamber;
a resin discharge door openably and closably provided in the resin discharge port;
a metal discharge port provided in the other side wall portion of the casing, the metal discharge port through which a crushed metal film is discharged from the separation chamber;
a screen provided in the metal discharge port, the screen through which the metal film passes while leaving the synthetic resin in the separation chamber;
a suction device connected to the metal discharge port, the suction device that suctions and takes out air and a metal film in the separation chamber to an exterior through the screen; and
a temperature controller that, by controlling the heater and also controlling a water sprinkling amount of the water sprinkler, controls a temperature in the separation chamber to an exfoliation temperature which is higher than a normal temperature and less than a melting temperature of the synthetic resin, the exfoliation temperature at which the synthetic resin and the metal film are exfoliated.

10. The metal film and resin separation apparatus according to Claim 9, wherein
the suction device includes a blower that suctions the air and the metal film in the separation chamber, and a cyclone separator that passes an air flow suctioned by the blower through a cyclone and further separates and recovers the metal film.

11. The metal film and resin separation apparatus according to Claim 9, wherein
a resin discharge chute is provided on the outside of the resin discharge port, and
a sieve device that sifts the synthetic resin taken out through the resin discharge chute and takes out a remaining metal film remaining in the synthetic resin is provided.
